# EUROPÄISCHE PATENTSCHRIFT

(11) **EP 0 685 434 B1**
(45) Veröffentlichungstag und Bekanntmachung des Hinweises auf die Patenterteilung: **12.03.1997**
(21) Anmeldenummer: 94111741.8
(22) Anmeldetag: 28.07.1994
(51) Int. Cl.: C03C 13/06, C03B 37/00

(54) **Verfahren zur Herstellung von Mineralfasern**
Method for the production of mineral fibres
Procédé de fabrication de fibres minérales

(30) Priorität: 16.05.1994 DE 4416834
(43) Veröffentlichungstag der Anmeldung: 06.12.1995
(73) Patentinhaber: Deutsche Rockwool Mineralwoll-GmbH, 45966 Gladbeck (DE)
(72) Erfinder: Paulitschke, Werner, D-41564 Kaarst (DE); Dietz, Klaus-Peter, D-39359 Calvörde (DE); Lehnen, Alfred, D-46244 Bottrop (DE)
(74) Vertreter: Köhne, Friedrich, Dipl.-Ing.

(56) Entgegenhaltungen:
- EP-A- 0 115 817
- WO-A-92/04289
- WO-A-92/09536
- WO-A-94/14718
- FR-A- 2 690 438
- US-A- 4 720 295

## Beschreibung

Die Erfindung bezieht sich auf ein Verfahren zur Herstellung von Mineralfasern.

Die Produktion von Mineralwolle-Dämmstoffen, insbesondere aus Steinwolle, erfolgt bisher fast ausschließlich auf der Grundlage natürlicher Rohstoffe, wie z.B. Basaltgestein, Diabasgestein und anderen Gesteinen, die in Steinbrüchen gebrochen und stückig aufbereitet werden. Im weiteren Sinn sind zu diesen Rohstoffen noch Schlacken verschiedener Hüttenprozesse hinzuzurechnen. Entsprechend dem großen Bedarf an Dämmstoffen zur Wärme- und Schalldämmung von Gebäuden, Industrieanlagen und dergleichen sind außerordentlich große Mengen an Rohstoffen erforderlich. Diese Rohstoffe werden in stückiger Form, z.B. in Schachtöfen, schichtweise mit Koks und Kalk in Schmelzaggregate eingegeben, hierin geschmolzen und schließlich zerfasert. Als Schmelzaggregate stehen verschiedene Ofentypen zur Verfügung, wie z. B. Schachtöfen, Wannenschmelzöfen, Elektroschmelzöfen und gas- oder ölbefeuerte Schmelzöfen gemäß WO-A- 9 204 286.

Bei dieser bisher seit Jahrzehnten ausgeübten Technik hat sich gerade in letzter Zeit eine Reihe von Problemen ergeben. Ein Problem besteht darin, daß die chemischmineralogische Zusammensetzung der erzeugten Fasern auf der Zusammensetzung der natürlichen Rohstoffe aufbaut und damit, was die Zusammensetzungsbestandteile anbetrifft, einer gewissen natürlichen Schwankungsbreite unterworfen ist. Diese natürlichen Zusammensetzungen der Rohstoffe lassen sich nur bedingt durch die Zusammenstellung von Chargen aus verschiedenen Einzelkomponenten oder durch Korrekturkomponenten, wie z. B. Kalk oder Rohglas verändern. Ein weiteres Problem besteht darin, daß die unterschiedlichen Typen von Schmelzöfen ganz spezielle Anforderungen an die Korn- bzw. Stückgröße der Rohstoffe voraussetzen. Diese jeweils für einen betreffenden Schmelzofen geeignete Stückgröße läßt sich auf der Basis von natürlichen Rohstoffen kaum oder nur unzureichend erreichen. Beim Aufbrechen von großen Gesteinsstücken läßt sich nicht vermeiden, daß unterschiedliche Stückgrößen anfallen, insbesondere größere Anteile an viel zu kleinen Gesteinsstücken. Da man diese aber nicht einfach als Abfall aussondern kann, ergeben sich Nachteile in der Wirkungsweise des betreffenden Schmelzofens.

Ein weiteres wesentliches Problem bei der Verwendung von natürlichen Rohstoffen ergibt sich dadurch, daß die chemische Zusammensetzung der erzeugten Fasern auf Grund der chemischen Bestandteile der natürlich vorkommenden Rohstoffe vorgegeben und in der Praxis kaum veränderbar ist. Diese Mineralfasern aus natürlichen Rohstoffen sind in letzter Zeit in den allerdings nicht wissenschaftlich nachgewiesenen Verdacht geraten, für den Menschen, insbesondere für die Handwerker, die mit Mineralwolleerzeugnissen umgehen, gesundheitsschädlich evtl. sogar krebserregend zu sein. Es hat nicht an Untersuchungen und Versuchen gefehlt, um diesen Verdacht zu widerlegen oder ggf. zu bestätigen. Es hat sich jedenfalls in umfangreichen Untersuchungen herausgestellt, daß es unter den zahlreichen natürlichen Rohstoffen einige wenige gibt, bei denen man mit größter Sicherheit die Aussage treffen kann, daß sie nicht gesundheitsschädlich in irgendeiner Form sind. Die Unbedenklichkeit dieser speziellen Mineralfasern beruht zum einen auf den zahlreichen durchgeführten Tests bei Versuchstieren, bei denen man größere Mengen von Fasern direkt in das Bauch- oder Brustfell eingespritzt hat und zum anderen auf der Feststellung und Erkenntnis, daß diese speziellen Fasern eine geringe Biobeständigkeit bzw. eine hohe Löslichkeit in körpereigenen Flüssigkeiten haben, sich also einfach auflösen oder vom Körper ausgeschieden werden, ohne irgendwelche gesundheitliche Schäden zu hinterlassen. Diese natürlichen Rohstoffe, sofern sie überhaupt mit der erforderlichen Reinheit gewonnen werden können, finden sich nur in wenigen außereuropäischen Ländern der Welt, so daß sie schon allein wegen der hohen Transportkosten für einen Masseneinsatz in der Mineralwolleindustrie nicht in Betracht kommen.

Bei der Verwendung von Rohstoffen, wie z.B. Schlacke, ergibt sich noch ein weiteres Problem, nämlich das einer großen Umweltbelastung. Die Schlacke enthält Schwefel, so daß beim Schmelzprozeß Schwefeldioxid SO₂ und Schwefel-Wasserstoff H₂S entstehen. Es müssen dann Sekundärmaßnahmen zur Entschwefelung der beim Schmelzprozeß entstehenden Rauchgase getroffen werden, wonach die Reststoffe entsorgt werden müssen.

Aus der Mineralwolle-Industrie sind Kunststeine bekannt, die als Bindemittel Zement oder Ton enthalten. Hier besteht das Problem darin, daß diese Bindemittel die gewünschten chemisch-mineralogischen Eigenschaften negativ beeinflussen und Quellen zusätzlicher Emissionen sind, z.B. durch den Schwefelgehalt des Zementes. Im Falle des Tongehaltes ist ein zusätzlicher Energieaufwand erforderlich, um die Feuchtigkeit aus dem Ton auszutreiben.

Der Erfindung liegt somit die Aufgabe zu Grunde, ein Verfahren zu schaffen, welches kostengünstig durchgeführt werden kann, bei dem keine umweltbelastenden Abgase auftreten und die damit hergestellten Mineralfasern keine gesundheitsschädlichen Auswirkungen mit sich bringen.

Erfindungsgemäß wird somit ein Verfahren zur Herstellung von Mineralfasern vorgeschlagen, mit einem Ausgangsmaterial in Form von Kunststeinen, welche aus einer Zusammensetzung von Weiß-Feinkalk und / oder gebranntem Dolomit mit Sand in einem Mengenverhältnis von 1:3,5 bis 1:14,0 und weiteren chemisch unbedenklichen Zuschlagstoffen gebildet werden, wobei die Zusammensetzungsbestandteile zuvor auf eine Körnung von 0,05 bis 8 mm aufgemahlen werden, anschließend die Kunststeine in einem Schmelzaggregat geschmolzen und die Schmelze einem Zerfaserungsaggregat zugeführt werden.

Eine vorteilhafte Weiterentwicklung ergibt sich dadurch, daß dem Zusammensetzungsbestandteil aus Weiß-Feinkalk und / oder gebranntem Dolomit Magnesiumoxid zugegeben wird.

Verfahrensmäßig hat sich als vorteilhaft erwiesen, daß die Kunststeine bei einer Preßfeuchte von 4 bis 7 Masse-% und einem spezifischen Verfestigungsdruck von 10 bis 25 N/mm² hergestellt und in einem Autoklaven bei einem Druck von 10 bis 20 bar über die Dauer von vier bis sechs Stunden ausgehärtet werden.

Je nachdem welcher Schmelzofen zur Verfügung steht, werden die Kunststeine so gepreßt, daß sie eine Endfestigkeit von 5 bis 60 N/mm² aufweisen.

Im Rahmen der Weiterentwicklung des erfindungsgemäßen Verfahrens ist es von Vorteil, daß den Zusammensetzungsbestandteilen Mineralwolle, insbesondere Abfallmineralwolle, beigegeben wird, deren Ursprungszusammensetzung derjenigen der Kunststeine entspricht.

Im folgenden sind einige vorteilhafte Alternativen für im Rahmen der Erfindung verwendbare Zuschlagstoffe sowie für bevorzugte Zusammensetzungen der Kunststeine angeführt. Vorteilhafterweise wird die Mineralwolle, sei es Abfallmineralwolle oder gebrauchte Mineralwolle, in einer Körnung von etwa 0,01 bis 0,5 mm als Zuschlagstoff beigemischt.

Als vorteilhaft ist auch anzusehen, daß die Kunststeine ≤70 Masse-% Mineralwolle, 28 bis 91 Masse-% Sand und 5 bis 15 Masse-% Weiß-Feinkalk und / oder gebrannten Dolomit und / oder Magnesiumoxid enthalten.

Erfindungsgemäß wird ferner vorgeschlagen, daß für die Kunststeine eine chemische Zusammensetzung gewählt wird, welche im wesentlichen aus SiO₂, FeO, Al₂O₃, Na₂O, BaO, K₂O, CaO, MgO, B₂O₃ besteht, wobei die Differenz der Summe, die aus den Masseanteilen von Na₂O, BaO, K₂O, CaO, MgO und B₂O₃ gebildet wird, minus dem doppelten Masseanteil an Al₂O₃, ≥30, vorzugsweise ≥40, beträgt.

Eine zweckmäßige Alternative besteht darin, daß für die Kunststeine eine Zusammensetzung gewählt ist, so daß die Schmelze aus folgenden Masseanteilen besteht:
- 49 bis 52 Masse-%: SiO₂
- ≤1 Masse-%: Al₂O₃
- ≤0,1 Masse-%: TiO₂
- ≤1 Masse-%: FeO
- 28 bis 35 Masse-%: CaO
- 15 bis 20 Masse-%: MgO
- ≤1 Masse-%: Na₂O + K₂O.
Eine besonders kostengünstige Alternative wird erreicht durch Masseanteile von >5 bis 70 Masse-% rückgeführter Mineralwolle, 28 bis 91 Masse-% Sand und 5 bis 15 Masse-% Weiß-Feinkalk.

Eine weitere Alternative im Rahmen der Erfindung besteht darin, daß für die Kunststeine eine Zusammensetzung aus folgenden Masseanteilen gewählt ist:
- 45 bis 65 Masse-%: Sand mit einer Körnung von 0,5 bis 2 mm,
- 10 bis 15 Masse-%: Weiß-Feinkalk, gebrannter Dolomit und / oder Magnesiumoxid,
- 20 bis 30 Masse-%: Olivinsand und / oder Kalkmehl.

Besonders vorteilhaft ist ferner, daß der Zusammensetzung 1 bis 10, vorzugsweise 5 bis 8, Masse-% oxidisches Eisenerz zugegeben wird. Auf diese Weise können besonders temperaturstabile Fasern für Anwendungstemperaturen größer als 700°C bis hin zu 1000^{o}C erzeugt werden.

Für die Beschickung eines Schmelzofens ist ferner als vorteilhaft anzusehen, einen stückigen Zusatz von 20 bis 30 Masse-% an Weichbrandkalk zu den Kunststeinen aufzugeben.

Eine weitere Alternative besteht darin, daß die Zusammensetzung für die Kunststeine aus folgenden Massebestandteilen besteht:
- 60 Masse-%: fein gemahlene Steinwolle mit einer Körnung von 0,01 bis 0,5 mm und einem Körnungsanteil von 30 Masse-% < 0,1 mm.
- 33 Masse-%: Sand mit einer Körnung von 0,5 bis 2,0 mm,
- 7 Masse-%: Weiß-Feinkalk.

Im Prinzip geht es bei den erfindungsgemäßen Lösungsvorschlägen darum, eine Schmelze zur Produktion von Mineralfasern auf der Basis von Kunststeinen herzustellen, wobei es möglich ist, auf einfache Weise den Kunststeinen die gewünsche Stückigkeit und Festigkeit zu verleihen. Desweiteren ist erfindungsgemäß möglich geworden, über die Kunststeine gebrauchte Mineralwolle-Dämmstoffe und Abfälle aus der Mineralwolleproduktion in den Schmelzprozeß zurückzuführen, ohne daß zusätzliche Emissionen, wie z.B. Schwefeldioxid SO₂ oder Schwefelwasserstoff H₂S entstehen. Es wurden oben bereits die Körnungen der fein aufgemahlenen Zusammensetzungsbestandteile angeführt. Diese fein aufgemahlenen Komponenten sind in der Lage, in die Ca-Silikat-Gitterstruktur aufgenommen zu werden, ohne daß die Festigkeit der Kunststeine darunter leidet.

Die Herstellung der Kunststeine erfolgt im Prinzip in der Weise, wie es in der Bauindustrie bei der Herstellung von Kalk-Sandsteinen bekannt ist. Als Beispiel seien im Rahmen der Erfindung bei der Herstellung der Kunststeine folgende technische Daten angeführt:
- Löschwasser:: 80 %
- Preßfeuchte:: 5,5%
- spezifischer Verfestigungsdruck:: 9,0 bis 25,05 N/mm²
- Härtedruck:: 16 bar
- Härtezeit:: 4,5 Stunden.

Im folgenden sind noch weitere vorteilhafte Ausführungsbeispiele des erfindungsgemäßen Verfahrens angegeben. Die Verwendung des jeweiligen Ausführungsbeispieles richtet sich danach, welche technischen Anforderungen an die herzustellenden Mineralfasern in der Praxis gestellt werden, d. h. ob das aus den Mineralfasern letztlich hergestellte Mineralfaserprodukt vornehmlich zur Wärmedämmung oder zur Schalldämmung dient oder ob es beispielsweise besonders auf die Feuerwiderstandsfähigkeit ankommt. Weitere Gesichtspunkte sind der Schmelzpunkt und die Schmelzdauer der Kunststeine, die mit der Feinkörnigkeit des aufgemahlenen Ausgangsmaterials in unmittelbarem Zusammenhang stehen. Ein weiteres Kriterium für die Auswahl des einen oder anderen Ausführungsbeispieles des erfindungsgemäßen Verfahrens ist die Verfügbarkeit der betreffenden Rohmaterialien auf dem Markt und deren Kosten.

Es wird somit ferner vorgeschlagen, daß für die Kunststeine eine Zusammensetzung gewählt ist, so daß die Schmelze im wesentlichen aus SiO₂, FeO, Al₂O₃, NA₂O, BaO, K₂O, CaO, MgO, B₂O₃ besteht, wobei die Differenz der Summe, die aus den Masseanteilen von Na₂O, BaO, K₂O, CaO, MgO und B₂O₃ gebildet wird, minus dem doppelten Masseanteil an A₂O₃, ≥30, vorzugsweise ≥40, beträgt.

Eine Alternative zu einem zuvor angegebenen Ausführungsbeispiel besteht darin, daß für die Kunststeine eine Zusammensetzung gewählt ist, so daß die Schmelze aus folgenden Masseanteilen besteht:
- 40 bis 64 Masse-%: SiO₂
- <4 Masse-%, vorzugsweise <2 Masse-%: Al₂0₃
- ≤1,5 Masse-%: TiO₂
- 1 bis 12 Masse-%: FeO + Fe₂O₃
- 10 bis 38 Masse-%: CaO
- 7bis 20 Masse-%: MgO
- 0 bis 6 Masse-%: Na₂O + K₂O.

Ein weiteres Verfahren ist gekennzeichnet durch eine solche Zugabe zu den Kunststeinen, daß die Schmelze 1 bis 10 Masse-%, vorzugsweise 5 bis 8 Masse-%, Eisenoxid enthält.

Weiterhin wird vorgeschlagen, daß zur Abstimmung auf die gewünschte Löslichkeit Zuschlagstoffe wie P₂O₅, B₂O₃ oder BaO beigegeben werden, so daß ihr Massebestandteil in der Schmelze <20 Masse-%, vorzugsweise <10 Masse-%, beträgt.

Unter gegebenen Umständen ist auch ein stückiger Zusatz von <50 Masse-% an Naturstein-Material oder Abfall-Steinwolle oder Abfall-Glas möglich. Der stückige Zusatz kann auch die Form von Briketts, z. B. Eierbriketts, haben.

Eine weitere vorteilhafte Ausgestaltung des Verfahrens besteht darin, daß für die Kunststeine eine Zusammensetzung gewählt ist, so daß die Schmelze aus folgenden Masse-anteilen besteht
- 48 bis 60 Masse-%: SiO₂
- ≤4 Masse-%, vorzugsweise ≤2 Masse-%: Al₂O₃
- ≤1,5 Masse-%: TiO₂
- 1 bis 10 Masse-%: FeO + Fe₂O₃
- 20 bis 38 Masse-%: CaO
- 7 bis 20 Masse-%: MgO
- 0 bis 6 Masse-%: Na₂O + K₂O
- ≤10 Masse-%: P₂O₅, B₂O₃, BaO.

Es hat sich als vorteilhaft erwiesen, daß als Zuschlagstoffe zu den Kunststeinen allein oder in Kombination wahlweise Glas, Olivinsand, Rutilit, Magnesit, Magnetit, Brucit, Flugasche oder Schlacke verwendet werden. Alternativ kommen als Zuschlagstoffe zu den Kunststeinen allein oder in Kombination wahlweise Weichbrandkalk, Diabas oder Pyroxenit in Betracht.

Schließlich wird noch eine weitere Alternative vorgeschlagen, nämlich, daß für die Kunststeine eine Zusammensetzung gewählt ist, so daß die Schmelze aus folgenden Masseanteilen besteht:
- 48 bis 60 Masse-%: SiO₂
- <4 Masse-%, vorzugsweise <2 Masse-%: Al₂O₃
- <1,5 Masse-%: TiO₂
- <1,5 Masse-%: FeO + Fe₂O₃
- 25 bis 35 Masse-%: CaO
- 8 bis 18 Masse-%: MgO
- 0 bis 6 Masse-%: Na₂O+K₂O
- <10 Masse-%: P₂O₅, B₂O₃, BaO.

Die Zusammensetzungsbestandteile der Kunststeine sowie die eventuell zusätzlich aufgegebenen stückigen Bestandteile der Charge haben meist einen sehr hohen Schmelzpunkt, der je nach Bestandteil variieren kann. Typische Schmelzpunkte sind 1250°C oer 1300°C oder 1375°C. Andere Schmelzpunkte liegen über 1450°C. Es hat sich herausgestellt, daß die Verweilzeit bis zum Schmelzen sowie die Schmelzzeit um so kürzer ist, je kleiner die Körnung des Rohmaterials gewählt ist. Es werden dazu normalerweise keine Flußmittel benötigt und auch die Festigkeitseigenschaften der Kunststeine werden dadurch nicht beeinträchtig. Unabhängig von den unterschiedlichen Schmelzpunkten vollzieht sich ein gleichmäßiger Schmelzvorgang. Dies ist besonders wichtig bei der Verwendung von Kupolöfen, aber auch in entsprechendem Maße bei Elektroöfen. Im Rahmen der Erfindung wird daher als besonders vorteilhaft vorgeschlagen, daß die Zusammensetzungsbestandteile der Kunststeine auf eine Körnung von <2 mm, vorzugsweise bis zu 80% auf <0,5 mm aufgemahlen werden.

Um die Qualität der herzustellenden Mineralfasern weiterhin zu verbessern, wird vorgeschlagen, daß 50 bis Masse-% der Zusammensetzungsbestandteile der Kunststeine aus anorganischen Materialien, wie Quarzsand, Olivinsand oder Kalkstein, bestehen, welche einen Schmelzpunkt von über 1450°C aufweisen.

Es wurde oben bereits angesprochen, daß die Beschaffung von Rohmaterialien im wesentlichen davon abhängig ist, welche Materialien auf dem Markt verfügbar sind, wobei auch die Beschaffungskosten eine große Rolle spielen. Andererseits hängt es auch von dem Verwendungszweck der herzustellenden Mineralfasern bzw. des Mineralfaserendproduktes ab, welche Anforderungen in der Praxis gestellt werden. Aus diesen Gründen ist es in der Praxis vielfach nicht erforderlich, daß die Ofencharge zu 100% aus Kunststeinen besteht. Es wird daher vorgeschlagen, daß zu der Ofencharge <50%, vorzugsweise 30%, stückiges und unbedenkliches Natursteinmaterial, wie Kalkstein, Dolomit, Rutilit, Magnesit, Magnetit, Brucit, Pyroxenit, Olivinsand oder Glas allein oder in Kombination, und / oder Abfallmineralmaterial zugegeben wird. Die Zugabe kann auch in Form von Briketts, z. B. Eierbriketts, erfolgen.

Die erfindungsgemäß herzustellenden Mineralfasern können zu den unterschiedlichsten Mineralfaserprodukten weiterverarbeitet werden, beispielsweise zu Mineralwollebahnen oder -platten zur Wärme- und Schalldämmung sowie zum Feuerschutz von Gebäuden, Industrieanlagen und dergleichen. Desweiteren können die Mineralfasern als Pflanzenwachstumssubstrat eingesetzt werden. Die Mineralfasern können auch als lose, gegebenenfalls flockige Wolle zum Ausfüllen von Hohlräumen, d. h. also als Füllstoffe verwendet werden. Als weiteres Anwendungsbeispiel sei die Verwendung als Verstärkungsfasern in anderen Baumaterialien angeführt, z. B. als Verstärkungsfasern in Zement- oder ähnlichen Produkten. Schließlich können die Mineralfasern auch als Füllstoffe in Zement-, Kunststoff- oder ähnlichen Produkten eingesetzt werden.

## Patentansprüche

1. Verfahren zur Herstellung von Mineralfasern mit einem Ausgangsmaterial in Form von Kunststeinen, welche aus einer Zusammensetzung von Weiß-Feinkalk und / oder gebranntem Dolomit mit Sand in einem Mengenverhältnis von 1:3,5 bis 1:14,0 und weiteren chemisch unbedenklichen Zuschlagstoffen gebildet werden, wobei die mensetzungsbestandteile zuvor auf eine Körnung von 0,05 bis 8 mm aufgemahlen werden, anschließend die Kunststeine in einem Schmelzaggregat geschmolzen und die Schmelze einem Zerfaserungsaggregat zugeführt werden.

2. Verfahren nach Anspruch 1, dadurch gekennzeichnet, daß dem Zusammensetzungsbestandteil aus Weiß-Feinkalk und / oder gebranntem Dolomit Magnesiumoxid zugegeben wird.

3. Verfahren nach Anspruch 1 oder 2, dadurch gekennzeichnet, daß die Kunststeine bei einer Preßfeuchte von 4 bis 7 Masse-% und einem spezifischen Verfestigungsdruck von 10 bis 25 N/mm² hergestellt und in einem Autoklaven bei einem Druck von 10 bis 20 bar über die Dauer von vier bis sechs Stunden ausgehärtet werden.

4. Verfahren nach einem der vorhergehenden Ansprüche, dadurch gekennzeichnet, daß die Kunststeine eine Endfestigkeit von 5 bis 60 N/mm² aufweisen.

5. Verfahren nach einem der vorhergehenden Ansprüche, dadurch gekennzeichnet, daß den Zusammensetzungsbestandteilen Mineralwolle, insbesondere Abfallmineralwolle, beigegeben wird, deren Ursprungszusammensetzung derjenigen der Kunststeine entspricht.

6. Verfahren nach Anspruch 5, dadurch gekennzeichnet, daß die Mineralwolle in einer Körnung von etwa 0,01 bis 0,5 mm als Zuschlagstoff beigemischt wird.

7. Verfahren nach einem der vorhergehenden Ansprüche, dadurch gekennzeichnet, daß die Kunststeine <70 Masse-% Mineralwolle, 28 bis 91 Masse-% Sand und 5 bis 15 Masse-% Weiß-Feinkalk und / oder gebrannten Dolomit und / oder Magnesiumoxid enthalten.

8. Verfahren nach einem der vorhergehenden Ansprüche, dadurch gekennzeichnet, daß für die Kunststeine eine chemische Zusammensetzung gewählt wird, welche im wesentlichen aus SiO₂, FeO, Al₂O₃, Na₂O, BaO, K₂O, CaO, MgO, B₂O₃ besteht, wobei die Differenz der Summe, die aus den Masseanteilen von Na₂O, BaO, K₂O, CaO, MgO und B₂O₃ gebildet wird, minus dem doppelten Masseanteil an Al₂O₃, ≥30, vorzugsweise ≥40, beträgt.

9. Verfahren nach Anspruch 1, dadurch gekennzeichnet, daß für die Kunststeine eine Zusammensetzung gewählt ist, so daß die Schmelze aus folgenden Masseanteilen besteht:
49 bis 52 Masse-% SiO₂
≤1 Masse-% Al₂O₃
≤0,1 Masse-% TiO₂
≤1 Masse-% FeO
28 bis 35 Masse-% CaO
15 bis 20 Masse-% MgO
≤1 Masse-% Na₂O + K₂O.

10. Verfahren nach Anspruch 8 oder 9, gekennzeichnet durch Masseanteile von >5 bis 70 Masse-% rückgeführter Mineralwolle, 28 bis 91 Masse-% Sand und 5 bis 15 Masse-% Weiß-Feinkalk.

11. Verfahren nach Anspruch 1, dadurch gekennzeichnet, daß für die Kunststeine eine Zusammensetzung aus folgenden Masseanteilen gewählt ist:
45 bis 65 Masse-% Sand mit einer Körnung von 0,5 bis 2 mm,
10 bis 15 Masse-% Weiß-Feinkalk, gebrannter Dolomit und / oder Magnesiumoxid,
20 bis 30 Masse-% Olivinsand und / oder Kalkmehl.

12. Verfahren nach einem der vorhergehenden Ansprüche, dadurch gekennzeichnet, daß der Zusammensetzung 1 bis 10 Masse-%, vorzugsweise 5 bis 8 Masse-%, oxidisches Eisenerz zugegeben wird.

13. Verfahren nach einem der vorhergehenden Ansprüche, gekennzeichnet durch einen stückigen Zusatz von 20 bis 30 Masse-% an Weichbrandkalk zu den Kunststeinen.

14. Verfahren nach Anspruch 1, dadurch gekennzeichnet, daß die Zusammensetzung für die Kunststeine aus folgenden Massebestandteilen besteht:
60 Masse-% fein gemahlene Steinwolle mit einer Körnung von 0,01 bis 0,5 mm und einem Körnungsanteil von 30 Masse-% < 0,1 mm.
33 Masse-% Sand mit einer Körnung von 0,5 bis 2,0 mm,
7 Masse-% Weiß-Feinkalk.

15. Verfahren nach Anspruch 1, dadurch gekennzeichnet, daß für die Kunststeine eine Zusammensetzung gewählt ist, so daß die Schmelze im wesentlichen aus SiO₂, FeO, Al₂O₃, NA₂O, BaO, K₂O, CaO, MgO, B₂O₃ besteht, wobei die Differenz der Summe, die aus den Masseanteilen von Na₂O, BaO, K₂O, CaO, MgO und B₂O₃ gebildet wird, minus dem doppelten Masseanteil an A₂O₃, ≥30, vorzugsweise ≥40, beträgt.

16. Verfahren nach Anspruch 1, dadurch gekennzeichnet, daß für die Kunststeine eine Zusammensetzung gewählt ist, so daß die Schmelze aus folgenden Masseanteilen besteht:
40 bis 64Masse-% SiO₂
<4 Masse-%, vorzugsweise <2 Masse-% Al₂0₃
≤1,5 Masse-% TiO₂
1 bis 12 Masse-% FeO + Fe₂O₃
10 bis 38 Masse-% CaO
7 bis 20 Masse-% MgO
0 bis 6 Masse-% Na₂O + K₂O.

17. Verfahren nach Anspruch 1, gekennzeichnet durch eine solche Zugabe zu den Kunststeinen, daß die Schmelze 1 bis 10 Masse-%, vorzugsweise 5 bis 8 Masse-%, Eisenoxid enthält.

18. Verfahren nach einem der vorhergehenden Ansprüche, dadurch gekennzeichnet, daß zur Abstimmung auf die gewünschte Löslichkeit Zuschlagstoffe wie P₂O₅, B₂O₃ oder BaO beigegeben werden, so daß ihr Massebestandteil in der Schmelze <20 Masse-%, vorzugsweise <10 Masse-%, beträgt.

19. Verfahren nach einem der vorhergehenden Ansprüche, gekennzeichnet durch einen stückigen Zusatz von <50 Masse-% an Naturstein-Material oder Abfall-Steinwolle oder Abfall-Glas.

20. Verfahren nach Anspruch 1, dadurch gekennzeichnet daß für die Kunststeine eine Zusammensetzung gewählt ist, so daß die Schmelze aus folgenden Masseanteilen besteht:
48 bis 60 Masse-% SiO₂
≤4 Masse-%, vorzugsweise ≤2 Masse-% Al₂O₃
≤1,5 Masse-% TiO₂
1 bis 10 Masse-% FeO + Fe₂O₃
20 bis 38 Masse-% CaO
7 bis 20 Masse-% MgO
0 bis 6 Masse-% Na₂O+K₂O
≤10 Masse-% P₂O₅, B₂O₃, BaO.

21. Verfahren nach Anspruch 1, dadurch gekennzeichnet, daß als Zuschlagstoffe zu den Kunststeinen allein oder in Kombination wahlweise Glas, Olivinsand, Rutilit, Magnesit, Magnetit, Brucit, Flugasche oder Schlacke verwendet werden.

22. Verfahren nach Anspruch 1, dadurch gekennzeichnet, daß als Zuschlagstoffe zu den Kunststeinen allein oder in Kombination wahlweise Weichbrandkalk, Diabas oder Pyroxenit verwendet werden.

23. Verfahren nach Anspruch 1, dadurch gekennzeichnet, daß für die Kunststeine eine Zusammensetzung gewählt ist, so daß die Schmelze aus folgenden Masseanteilen besteht:
48 bis 60 Masse-% SiO₂
<4 Masse-%, vorzugsweise <2 Masse-% Al₂O₃
<1,5 Masse-% TiO₂
<1,5 Masse-% FeO + Fe₂O₃
25 bis 35 Masse-% CaO
8 bis 18 Masse-% MgO
0 bis 6 Masse-% Na₂O+K₂O
<10 Masse-% P₂O₅, B₂O₃, BaO.

24. Verfahren nach einem der vorhergehenden Ansprüche, dadurch gekennzeichnet, daß die Zusammensetzungsbestandteile der Kunststeine auf eine Körnung von <2 mm, vorzugsweise bis zu 80% auf <0,5 mm aufgemahlen werden.

25. Verfahren nach einem der vorhergehenden Aansprüche, dadurch gekennzeichnet, daß 50 bis Masse-% der Zusammensetzungsbestandteile der Kunststeine aus anorganischen Materialien, wie Quarzsand, Olivinsand oder Kalkstein, bestehen, welche einen Schmelzpunkt von über 1450°C aufweisen.

26. Verfahren nach einem der vorhergehenden Ansprüche, dadurch gekennzeichnet, daß zu der Ofencharge <50%, vorzugsweise 30%, stückiges und unbedenkliches Natursteinmaterial, wie Kalkstein, Dolomit, Rutilit, Magnesit, Magnetit, Brucit, Pyroxenit, Olivinsand oder Glas allein oder in Kombination, und / oder Abfallmineralmaterial zugegeben wird.

## Claims

1. Method of producing mineral fibers with a base material in the form of artificial stones which are formed of a composition of white fine lime and/or burnt dolomite with sand in a quantitative proportion of 1:3.5 up to 1:14.0 and further additives chemically recognized as safe, the composition constituents being ground beforehand to a grain size of 0.05 to 8 mm, thereafter the artificial stones being melted in a melting unit, and the melted mass being supplied to a defibration unit.

2. Method according to claim 1, characterized in that the composition constituent of white fine lime and/or burnt dolomite is added magnesium oxide.

3. Method according to claim 1 or 2, characterized in that the artificial stones are produced at a pressing dampness of 4 to 7 %-weight and a specific solidification pressure of 10 to 25 N/mm² and are cured in an autoclave at a pressure of 10 to 20 bar over a period of four to six hours.

4. Method according to any one of the preceding claims, characterized in that the artificial stones have an ultimate strength of 5 to 60 N/mm².

5. Method according to any one of the preceding claims, characterized in that the composition constituents are added mineral wool, particularly waste mineral wool, of which the original composition corresponds to that of the artificial stones.

6. Method according to claim 5, characterized in that the mineral wool is admixed at a grain size of approximately 0.01 to 0.5 mm as an additive.

7. Method according to any one of the preceding claims, characterized in that the artificial stones contain ≤-70 %-weight of mineral wool, 28 to 91 %-weight of sand and 5 to 15 %-weight of white fine lime and/or burnt dolomite and/or magnesium oxide.

8. Method according to any one of the preceding claims, characterized in that for the artificial stones a chemical composition is selected which essentially consists of SiO₂, FeO, Al₂O₃, Na₂O, BaO, K₂O, CaO, MgO, B₂O₃, the difference of the sum which is formed of the parts by weight of Na₂O, BaO, K₂O, CaO, MgO and B₂O₃, minus twice the part by weight of Al₂O₃, being ≥30, preferably ≥40.

9. Method according to claim 1, characterized in that for the artificial stones a composition is selected such that the melted mass consists of the following parts by weight:
49 to 52 %-weight SiO₂
≤1 %-weight Al₂O₃
≤0.1 %-weight TiO₂
≤1 %-weight FeO
28 to 35 %-weight CaO
15 to 20 %-weight MgO
≤1 %-weight Na₂O + K₂O.

10. Method according to claim 8 or 9, characterized by parts by weight of >5 to 70 %-weight of recycled mineral wool, 28 to 91 %-weight of sand and 5 to 15 %-weight of white fine lime.

11. Method according to claim 1, characterized in that for the artificial stones a composition of the following parts by weight is selected:
45 to 65 %-weight of sand at a grain size of 0.5 to 2 mm,
10 to 15 %-weight of white fine lime, burnt dolomite and/or magnesium oxide,
20 to 30 %-weight of olivine sand and/or lime powder.

12. Method according to any one of the preceding claims, characterized in that the composition is added 1 to 10 %-weight, preferably 5 to 8 %-weight, of oxidic iron ore.

13. Method according to any one of the preceding claims, characterized by a lumpy addition of 20 to 30 %-weight of soft burned lime to the artificial stones.

14. Method according to claim 1, characterized in that the composition of the artificial stones consists of the following parts by weight:
60 %-weight of finely ground rockwool at a grain size of 0.01 to 0.5 mm and a grain size part of 30 %-weight <0.1 mm,
33 %-weight of sand at a grain size of 0.5 to 2.0 mm,
7 %-weight of white fine lime.

15. Method according to claim 1, characterized in that for the artificial stones a composition is selected such that the melted mass essentially consists of SiO₂, FeO, A1₂O₃, Na₂O, BaO, K₂O, CaO, MgO, B₂O₃, the difference of the sum formed of the parts by weight of Na₂, BaO, K₂O, CaO, MgO and B₂O₃, minus twice the part by weight of A₂O₃, being ≥30, preferably ≥40.

16. Method according to claim 1, characterized in that for the artificial stones a composition is selected such that the melted mass consists of the following parts by weight:
40 to 64 %-weight SiO₂
<4 %-weight, preferably <2 %-weight, Al₂O₃
≤1.5 %-weight TiO₂
1 to 12 %-weight FeO + Fe₂O₃
10 to 38 %-weight CaO
7 to 20 %-weight MgO
O to 6 %-weight Na₂O + K₂O.

17. Method according to claim 1, characterized by an addition to the artificial stones such that the melted mass contains 1 to 10 %-weight, preferably 5 to 8 %-weight, of iron oxide.

18. Method according to any one of the preceding claims, characterized in that for matching for the desired solubility additives like P₂O₅, B₂O₃ or BaO are admixed so that their mass constituent in the melted mass amounts to <20 %-weight, preferably <10 %-weight.

19. Method according to any one of the preceding claims, characterized by a lumpy addition of <50 %-weight of natural stone material or waste rockwool or waste glass.

20. Method according to claim 1, characterized in that for the artificial stones a composition is selected such that the melted mass consists of the following parts by weight:
48 to 60 %-weight SiO₂
≤4 %-weight, preferably ≤2 %-weight, Al₂O₃
≤1.5 %-weight TiO₂
1 to 10 %-weight FeO + Fe₂O₃
20 to 38 %-weight CaO
7 to 20 %-weight MgO
0 to 6 %-weight Na₂O + K₂O
≤10 %-weight P₂O₅, B₂O₃, BaO.

21. Method according to claim 1, characterized in that as additives for the artificial stones glass, olivine sand, rutilite, magnesite, magnetite, brucite, flue ash or slag are selectively used either alone or in combination.

22. Method according to claim 1, characterized in that as additives for the artificial stones soft burned lime, diabase or pyroxenite are selectively used either alone or in combination.

23. Method according to claim 1, characterized in that for the artificial stones a composition is selected such that the melted mass consists of the following parts by weight:
48 to 60 %-weight SiO₂
<4 %-weight, preferably <2 %-weight, Al₂O₃
<1.5 %-weight TiO₂
<1.5 %-weight FeO + Fe₂O₃
25 to 35 %-weight CaO
8 to 18 %-weight MgO
0 to 6 %-weight Na₂O + K₂O
<10 %-weight P₂O₅, B₂O₃, BaO.

24. Method according to any one of the preceding claims, characterized in that the composition constituents of the artificial stones are ground to a grain size of <2 mm, preferably up to 80% to <0.5 mm.

25. Method according to any one of the preceding claims, characterized in that up to 50 %-weight of the composition constituents of the artificial stones consist of inorganic materials such as silica, olivine sand or limestone, of which the melting point is higher than 1450°C.

26. Method according to any one of the preceding claims, characterized in that the kiln charge is added <50%, preferably 30%, of lumpy natural stone material recognized as safe, such as limestone, dolomite, rutilite, magnesite, magnetite, brucite, pyroxenite, olivine sand or glass either alone or in combination, and/or waste mineral material.

## Revendications

1. Procédé de fabrication de fibres minérales à partir d'une matière sous forme de pierres artificielles, que l'on forme à partir d'une composition comportant une chaux pulvérisée blanche et/ou de la dolomite calcinée avec du sable en un rapport entre les quantités de 1:3,5 à 1:14,0, et d'autres matières additives ne soulevant pas d'objections chimiques, procédé selon lequel les constituants de la composition sont au préalable broyés et moulus jusqu'à une granulométrie de 0,05 à 8 mm, puis les pierres artificielles sont fondues dans un appareillage de fusion et la masse fondue est acheminée à un appareillage de formation de fibres.

2. Procédé selon la revendication 1, caractérisé en ce que de l'oxyde de magnésium est ajouté aux constituants de la composition formée par de la chaux blanche pulvérisée et/ou de la dolomite calcinée.

3. Procédé selon la revendication 1 ou 2, caractérisé en ce que les pierres artificielles sont produites à une humidité sous compression de 4 à 7% de la masse et à une pression de solidification spécifique de 10 à 25 N/mm² et sont durcies dans un autoclave à une pression de 10 à 20 bars sur une durée de quatre à six heures.

4. Procédé selon l'une des revendications précédentes, caractérisé en ce que les pierres artificielles présentent une solidité ou résistance mécanique finale de 5 à 60 N/mm².

5. Procédé selon l'une des revendications précédentes, caractérisé en ce qu'aux constituants de la composition, on ajoute de la laine minérale, notamment des déchets de laine minérale, dont la composition initiale correspond à celle des pierres artificielles.

6. Procédé selon la revendication 5, caractérisé en ce que l'on incorpore, comme matière additive, de la laine minérale ayant une granulométrie d'environ 0,01 à 0,5 mm.

7. Procédé selon l'une des revendications précédentes, caractérisé en ce que les pierres artificielles contiennent au maximum 70% de leur masseen de la laine minérale, 28 à 91% de leur masse en sable et 5 à 15% en masse de chaux pulvérisée blanche et/ou de la dolomite calcinée et/ou d'oxyde de magnésium.

8. Procédé selon l'une des revendications précédentes, caractérisé en ce qu'on choisit pour les pierres artificielles une composition chimique consistant essentiellement en SiO₂, FeO, Aℓ₂O₃,Na₂O, BaO, K₂O, CaO, MgO, B₂O₃, la différence entre la somme fournie par les proportions en masse de Na₂O, BaO, K₂O, CaO, MgO et B₂O₃, moins le double de la proportion en masse de Aℓ₂O₃, est ≥30, et avantageusement ≥40.

9. Procédé selon la revendication 1, caractérisé en ce qu'on choisit pour les pierres artificielles une composition telle que la masse fondue consiste en les parties en masse suivantes:
49 à 52% en masse de SiO₂
≤ 1 % en masse de Aℓ₂O₃
≤ 0,1 % en masse de TiO₂
≤ 1 % en masse de FeO
28 à 35% en masse de CaO
15 à 20% en masse de MgO
≤ 1 % en masse pour Na₂O + K₂O.

10. Procédé selon la revendication 8 ou 9, caractérisé en ce que la composition comporte des proportions en masse de >5 à 70% en masse de laine minérale recyclée, 28 à 91% en masse de sable et 5 à 15% en masse de chaux blanche pulvérisée.

11. Procédé selon la revendication 1, caractérisé en ce qu'on choisit pour les pierres artificielles une composition formée des proportions en masse suivantes:
45 à 65% en masse de sable ayant une granulométrie de 0,5 à 2 mm,
10 à 15% en masse de chaux blanche pulvérisée, de dolomite calcinée et/ou d'oxyde de magnésium,
20 à 30% en masse de sable d'olivine et/ou de farine de chaux.

12. Procédé selon l'une des revendications précédentes, caractérisé en ce qu'on ajoute à la composition 1 à 10% en masse, avantageusement 5 à 8% en masse, de minerai de fer oxydé.

13. Procédé selon l'une des revendications précédentes, caractérisé en ce qu'on ajoute aux pierres artificielles 20 à 30% en masse de morceaux de chaux calcinée très plastique.

14. Procédé selon la revendication 1, caractérisé en ce que la composition des pierres artificielles consiste en les constituants suivants:
60% en masse de laine minérale finement moulue, ayant une granulométrie de 0,01 à 0,5 mm et dont 30% en masse des particules ont moins de 0,1 mm,
33% en masse de sable ayant une granulométrie de 0,5 à 2,0 mm,
7% en masse de chaux pulvérisée blanche.

15. Procédé selon la revendication 1, caractérisé en ce qu'on choisit pour les pierres artificielles une composition telle que la masse fondue consiste essentiellement en Sio2, FeO, Aℓ₂O₃,Na₂O, BaO, K₂O, CaO, MgO, B₂O₃, la différence des sommes formées par les pourcentages en masse de Na₂O, BaO, K₂O, CaO, MgO et B₂O₃ moins le double de la proportion en masse de Aℓ₂O₃, est ≥ 30 avantageusement ≥ 40.

16. Procédé selon la revendication 1, caractérisé en ce que l'on choisit pour les pierres artificielles une composition telle que la masse fondue consiste en les proportions en masse suivantes:
40 à 64% en masse de SiO₂
<4% en masse, avantageusement <2% en masse de Aℓ₂O₃
Une proportion en masse de ≤ 1,5 de TiO₂
1 à 12% en masse de FeO + Fe₂O₃
10 à 38% en masse de CaO
7 à 20% en masse de MgO
0 à 6% en masse de Na₂O + K₂O

17. Procédé selon la revendication 1, caractérisé en ce qu'on ajoute aux pierres artificielles une matière additive telle que la masse fondue contient 1 à 10% en masse, avantageusement 5 à 8% en masse, d'oxyde de fer.

18. Procédé selon l'une des revendications précédentes, caractérisé en ce que, pour ajuster à la solubilité voulue, on ajoute des matières additives comme P₂O₅, B₂O₃ ou BaO, de sorte que leur proportion en masse dans la masse fondue vale <20% en masse, avantageusement <10% en masse.

19. Procédé selon l'une des revendications précédentes, caractérisé par une addition de <50% en masse de morceaux d'un matériau en pierre naturelle ou résidus ou déchets de laine minérale ou de résidus ou déchets de verre.

20. Procédé selon la revendication 1, caractérisé en ce que l'on choisit pour les pierres artificielles une composition telle que la masse fondue consiste en les proportions en masse suivantes:
48 à 60% en masse de SiO₂
≤4% en masse, avantageusement ≤2% en masse, de Aℓ₂O₃
Une proportion en masse de ≤ 1,5% de TiO₂
1 à 10% en masse de FeO + Fe₂O₃
20 à 38% en masse de CaO
7 à 20% en masse de MgO
0 à 6% en masse de Na₂O + K₂O
Une proportion ≤10% en masse de P₂O₅, B₂O₃, BaO.

21. Procédé selon la revendication 1, caractérisé en ce qu'on utilise comme matières additives pour les pierres artificielles, isolément ou en combinaison, au choix, du verre, du sable d'olivine, de la rutilite, de la magnésite, de la magnétite, de la brucite, des cendres volantes ou des scories.

22. Procédé selon la revendication 1, caractérisé en ce qu'on utilise comme matières additives pour les pierres artificielles, isolément ou en combinaison, au choix, de la chaux calcinée très plastique, de la diabase ou de la pyroxénite.

23. Procédé selon la revendication 1, caractérisé en ce qu'on choisit pour les pierres artificielles, une composition telle que la masse fondue consiste en les proportions en masse suivantes:
48 à 60% en masse de SiO₂
<4% en masse, avantageusement <2% en masse , de Aℓ₂O₃
<1,5% en masse de TiO₂
<1,5%en masse de FeO + Fe₂O₃
25 à 35% en masse de CaO
8 à 18% en masse de MgO
0 à 6% en masse de Na₂O + K₂O
<10% en masse de P₂O₅, B₂O₃, BaO.

24. Procédé selon l'une des revendications précédentes, caractérisé en ce qu'on broie et moud les parties constitutives de la composition des pierres artificielles de façon à obtenir une granulométrie de <2 mm, avantageusement telle que jusqu'à 80% en poids des particules aient <0,5 mm.

25. Procédé selon l'une des revendications précédentes, caractérisé en ce que 50% en masse des constituants de la composition des pierres artificielles consistent en des matières minérales comme du sable de quartz, du sable d'olivine, ou du calcaire, ces matières présentant un point de fusion supérieur à 1450°C.

26. Procédé selon l'une des revendications précédentes, caractérisé en ce qu'on ajoute à la charge des fourneaux <50%, avantageusement 30% de matériaux de pierres naturelles, en morceaux et ne soulevant pas d'objection, comme du calcaire, de la dolomite, de la rutilite, de la magnésite, de la magnétite, de la brucite, de la pyroxénite, du sable d'olivine ou du verre, isolément ou en combinaison et/ou des déchets ou rebuts de matières minérales.
